# EUROPEAN PATENT APPLICATION

(11) **EP 4 797 127 A1**
(43) Date of publication of application: **26.08.2026**
(21) Application number: 26158929.5
(22) Date of filing: 17.02.2026
(51) Int. Cl.: G06F 21/31, H04L 9/40

(54) **SYSTEMS AND METHODS FOR SUSPICIOUS LOGIN INTERCEPT USING AUTHENTICATION CONFIDENCE SCORE ON A TRUSTED LOGIN**

(30) Priority: 21.02.2025 US 202519060321
(71) Applicant: JPMorgan Chase Bank, N.A., New York, NY 10179 (US)
(72) Inventor: Razi, Gilda, New York, 10179 (US); Loncaric, Goran, New York, 10179 (US)
(74) Representative: Patentanwälte Olbricht Buchhold Keulertz

(57) **Abstract**

Systems and methods for suspicious login intercept using authentication confidence score on a trusted login are disclosed. A method may include: (1) receiving, by a computer program executed by an electronic device, a current login attempt by a user using a user electronic device; (2) generating, by the computer program, an authentication confidence score based on the current login attempt; (3) retrieving, by the computer program, login event attributes for a past login event with a low authentication confidence score in response to the current login attempt having a high authentication confidence score; (4) displaying, by the computer program, the login event attributes on the user electronic device; (5) receiving, by the computer program, a request to deactivate a user electronic device involved in the past login event; and (6) deactivating, by the computer program, the user electronic device involved in the past login event.

## Description

### BACKGROUND OF THE INVENTION

### 1. Field Of The Invention

Embodiments generally relate to systems and methods for suspicious login intercept using authentication confidence score on a trusted login.

### 2. Description of the Related Art

Users are under constant threat of information theft. For example, user login information may be captured and sold on the dark web, and then used to log into the user's accounts without the user's knowledge.

### SUMMARY OF THE INVENTION

Systems and methods for suspicious login intercept using authentication confidence score on a trusted login are disclosed. According to one embodiment, a method may include: (1) receiving, by a computer program executed by an electronic device, a current login attempt by a user using a user electronic device; (2) generating, by the computer program, an authentication confidence score based on the current login attempt; (3) retrieving, by the computer program, login event attributes for a past login event with a low authentication confidence score in response to the current login attempt having a high authentication confidence score; (4) displaying, by the computer program, the login event attributes on the user electronic device; (5) receiving, by the computer program, a request to deactivate a user electronic device involved in the past login event; and (6) deactivating, by the computer program, the user electronic device involved in the past login event.

In one embodiment, the authentication confidence score may be based on the current login attempt matching a user login pattern for the user.

In one embodiment, the authentication confidence score may be based on a type of login, a login history of the user electronic device, a geolocation of the user electronic device, and/or an IP address used by the user electronic device.

In one embodiment, the login event attributes comprise a device type for the user electronic device involved in the past login event, a date and time of the past login event, and an IP address of the past login event.

In one embodiment, the current login attempt may be a browser-based login attempt.

In one embodiment, the current login attempt may be an application-based login attempt.

In one embodiment, deactivating the user electronic device involved in the past login event removes the user electronic device involved in the past login event from a list of trusted devices.

According to another embodiment, a method may include: (1) receiving, by a computer program executed by an electronic device, a current login attempt by a user using a user electronic device; (2) generating, by the computer program, an authentication confidence score based on the current login attempt; (3) storing, by the computer program, login event attributes for the current login attempt; (4) sending, by the computer program, an out-of-band message to the user requesting user login confirmation; (5) receiving, by the computer program, confirmation for the current login attempt from the user; and (6) performing, by the computer program, step-up authentication using the user electronic device.

In one embodiment, the authentication confidence score may be based on the current login attempt matching a user login pattern for the user.

In one embodiment, the authentication confidence score may be based on a type of login, a login history of the user electronic device, a geolocation of the user electronic device, and/or an IP address used by the user electronic device.

In one embodiment, the login event attributes comprise a device type for the user electronic device, a date and time of the current login attempt, and an IP address of the current login attempt.

In one embodiment, the current login attempt may be a browser-based login attempt.

In one embodiment, the current login attempt may be an application-based login attempt.

According to another embodiment, a non-transitory computer readable storage medium may include instructions stored thereon, which when read and executed by one or more computer processors, cause the one or more computer processors to perform steps comprising: receiving a current login attempt by a user using a user electronic device; generating an authentication confidence score based on the current login attempt; retrieving login event attributes for a past login event with a low authentication confidence score in response to the current login attempt having a high authentication confidence score; displaying the login event attributes on the user electronic device; receiving a request to deactivate a user electronic device involved in the past login event; and deactivating the user electronic device involved in the past login event.

In one embodiment, the authentication confidence score may be based on the current login attempt matching a user login pattern for the user.

In one embodiment, the authentication confidence score may be based on a type of login, a login history of the user electronic device, a geolocation of the user electronic device, and/or an IP address used by the user electronic device.

In one embodiment, the login event attributes comprise a device type for the user electronic device involved in the past login event, a date and time of the past login event, and an IP address of the past login event.

In one embodiment, the current login attempt may be a browser-based login attempt.

In one embodiment, the current login attempt may be an application-based login attempt.

In one embodiment, deactivating the user electronic device involved in the past login event removes the user electronic device involved in the past login event from a list of trusted devices.

### BRIEF DESCRIPTION OF THE DRAWINGS

For a more complete understanding of the present invention, the objects and advantages thereof, reference is now made to the following descriptions taken in connection with the accompanying drawings in which:
Figure 1 depicts a system for suspicious login intercept using authentication confidence score on a trusted login according to an embodiment;
Figures 2A and 2B depict a method for suspicious login intercept using authentication confidence score on a trusted login according to an embodiment;
Figure 3 depicts an exemplary computing system for implementing aspects of the present disclosure.

### DETAILED DESCRIPTION OF PREFERRED EMBODIMENTS

Embodiments generally relate to systems and methods for suspicious login intercept using authentication confidence score on a trusted login.

Embodiments may intercept a login process after successful login using, for example, a username and password. Depending on an authentication confidence score, the user may be presented with the information for the last login (e.g., date and time, IP address, geolocation, and/or device), and the user may be asked to confirm whether or not the user was responsible for the last login.

A message, such as "We noticed an out of pattern login at <date/time> from <IP address, geolocation & device>" with two buttons such as "That was me" and "View more details" or similar may be provided. Selection of the "That was me" button may continue to a landing page or - all OK - continue [to dashboard]' and 'I'd like to check this further - go to My Devices page' where users can see more info and remove devices as needed.

In one embodiment, the user may be presented information regarding active, trusted or registered devices, deactivated or untrusted devices, etc. In one embodiment, the devices may be listed on a website or screen; in another embodiment, the user may be provided with a link to a page with the devices.

The devices that are presented may be devices that the user has used to login to the user account.

In one embodiment, the login may be intercepted only when the last login was deemed to be suspicious based on, for example, an authentication confidence, and the current login has a high authentication confidence score. The authentication confidence score may be a score that may be based on, for example, the user's login process (e.g., type of login (biometric vs. username and password), metadata collected during login, etc.), a history of login attempts with the user device (e.g., first use, registered device, etc.), the geolocation of the electronic device (e.g., in a known area, in an unknown area, etc.), the IP address (e.g., a known IP address), network information (e.g., a known network, a public network, etc.).

In another embodiment, patterns associated with login attempts by the user may be used to generate an authentication confidence score. For example, if the current login attempt is consistent with the user's login patterns, the current login attempt may have a high authentication confidence score. If the current login attempt is inconsistent with the user's login patterns, the current login attempt may have a low authentication confidence score.

The authentication confidence score may be a numeric range (e.g., 1-10, 1-100), a letter range (A-F), qualitative (e.g., high-low, red-amber-green), etc. Thus, this targeted approach alerts genuine users to potential security threats without unnecessarily interrupting their login experience.

In one embodiment, if the user's current login has a low authentication score, a separate message may be sent to the user by email, short messaging service, etc. at a registered email or SMS address. The user may be presented with information on the login (e.g., date and time, IP address, geolocation, and/or device) and may be asked to confirm whether the current login is the user. The message may include a link to the "my devices" page.

By focusing on suspicious logins, embodiments may provide relevant and urgent security alerts, thereby enhancing user trust and maintaining a smooth user experience for the majority of logins. Additionally, this approach enhances user security awareness and control without requiring changes to the web/app dashboards.

Embodiments may provide at least some of the following. (1) enhancing security awareness by displaying the last login information (this helps users stay vigilant about their account activity and take immediate action if they notice anything unusual; (2) building trust and transparency; (3) improving the user experience and convenience by linking to the "My Devices" page, which offers a convenient way for users to manage their devices and enhances their control over account security; (4) encouraging quick identification and response to potential security incidents can minimize the impact of unauthorized access.

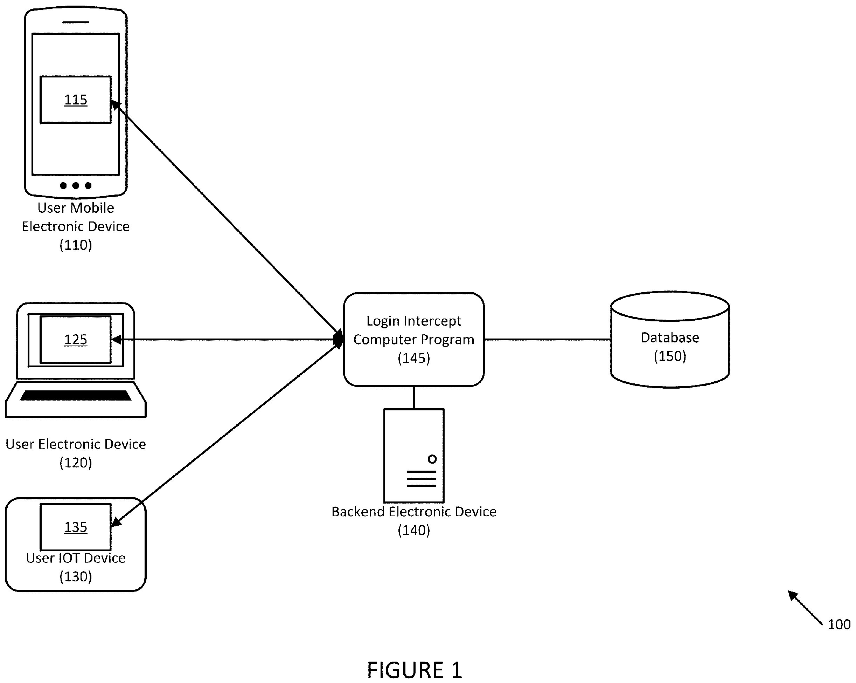

Referring to Figure 1, a system for suspicious login intercept using authentication confidence score on a trusted login is disclosed according to an embodiment. System 100 may include user mobile electronic device 110, which may be a smart phone, a smart watch, etc. User mobile electronic device 110 may execute computer program 115, which may be an application, a browser, etc.

System 100 may also include user electronic device 120, which may be a computer (e.g., workstation, desktop, laptop, notebook, etc.). User electronic device 120 may execute computer program 125, which may be an application, a browser, etc.

System 100 may further include user Internet of Things (IoT) device 130, that may execute computer program 135, which may be an application, a browser, etc.

System 100 may further include backend electronic device 140, which may be a server (e.g., physical and/or cloud-based), a computer, etc. Backend electronic device 140 may execute a computer program, such as login intercept computer program 145. Login intercept computer program 145 may receive login information for attempted logins involving user mobile electronic device 110, user electronic device 120, and user IOT device 130, and may determine a confidence level in a login attempt, and may present options to a user to deactivate a device that may have a suspicious login.

Database 150 may store information on login attempts, as well as information on the user's active electronic devices and deactivated electronic devices.

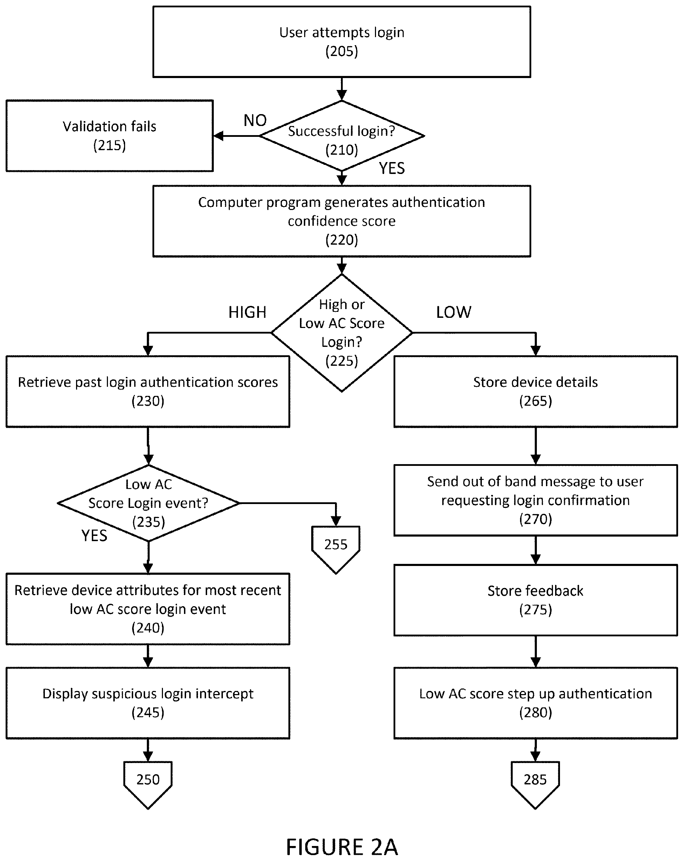

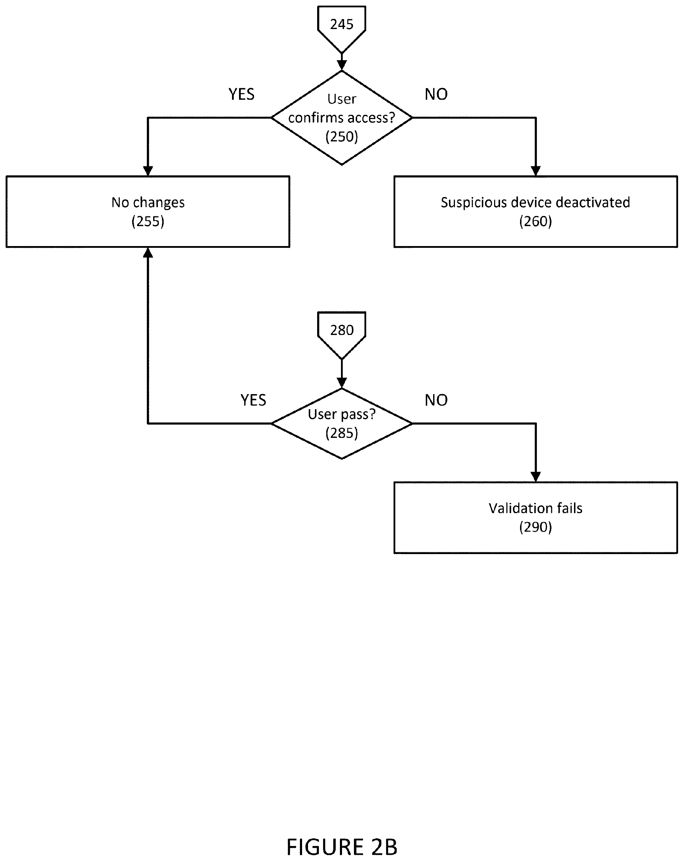

Referring to Figures 2A and 2B, a method for suspicious login intercept using authentication confidence score on a trusted login is disclosed according to an embodiment.

In step 205, using a web browser executed on a user electronic device, or an application executed by a mobile electronic device, a user may attempt to log in to an account. For example, the user may enter a username and password, etc. The user may be given a number of attempts to successfully log in.

If, in step 210, the login is unsuccessful, in step 215, the validation may fail.

If the login is successful, in step 220, a computer program, such as a login intercept computer program, may generate an authentication confidence score. The authentication confidence score may indicate a confidence level that the user who logged in is the registered user.

If, in step 225, the AC score is high (e.g., about a threshold), in step 230, the computer program may retrieve past login authentication scores for a period of time (e.g., 30 days or some other configurable number of days), and may determine if there was a low AC score login event (e.g., a login attempt with an AC score that is below a threshold).

The threshold may be configured by the entity maintaining the account with which the user is attempting to log in to.

If there was not a low AC score login event, the process may continue to step 255 with no changes.

If, in step 235, there was a low AC score login event, in step 240, the computer program may retrieve device attributes for the most recent low AC score login event, and in step 245, the computer program may display suspicious login intercept. The suspicious login intercept may present at least some of the device attributes (e.g., device type) and login details (e.g., IP address, date and time, etc.) to the user.

In one embodiment, the device information may be presented in a "my devices" page that may identify all of the user's registered devices, including active devices and deactivated devices. The user may select any active devices to deactivate as desired.

In step 250, if the user confirms that the low AC score login event was the user, in step 255, no changes are made.

If the user indicates that the low AC score login event was not the user, in step 260, the suspicious device used in the low AC score login event may be deactivated. For example, the suspicious device may be removed from a list of trusted devices and treated as an untrusted device for future logins.

In step 225, if the login was a low AC score login, in step 265, the computer program may store the device details (e.g., device type) and login details (e.g., IP address, date and time, geolocation, etc.).

In step 270, the computer program may optionally send an out-of-band message to the user requesting login confirmation. The message may be sent, for example, by email, SMS, etc.

In step 275, the user may provide feedback on whether the login is the user or not. This feedback may be provided asynchronously.

In step 280, the computer program may initiate low AC step up authentication. For example, the computer program may require the user to provide additional login credentials, to provide out-of-band authentication, etc.

If, in step 285, the user passes the low AC step up authentication, in step 255, no changes are made.

If, in step 285, the user does not pass the low AC step up authentication, in step 290, the validation may fail, and access may be denied.

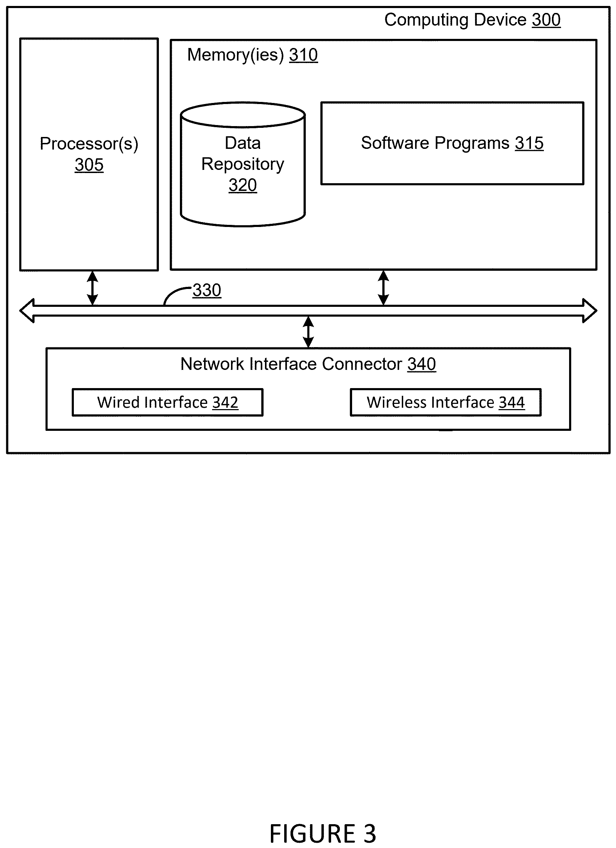

Figure 3 depicts an exemplary computing system for implementing aspects of the present disclosure. Figure 3 depicts exemplary computing device 300. Computing device 300 may represent the system components described herein. Computing device 300 may include processor 305 that may be coupled to memory 310. Memory 310 may include volatile memory. Processor 305 may execute computer-executable program code stored in memory 310, such as software programs 315. Software programs 315 may include one or more of the logical steps disclosed herein as a programmatic instruction, which may be executed by processor 305. Memory 310 may also include data repository 320, which may be nonvolatile memory for data persistence. Processor 305 and memory 310 may be coupled by bus 330. Bus 330 may also be coupled to one or more network interface connectors 340, such as wired network interface 342 or wireless network interface 344. Computing device 300 may also have user interface components, such as a screen for displaying graphical user interfaces and receiving input from the user, a mouse, a keyboard and/or other input/output components (not shown).

Although several embodiments have been disclosed, it should be recognized that these embodiments are not exclusive to each other and features from one embodiment may be used with others.

Hereinafter, general aspects of implementation of the systems and methods of embodiments will be described.

Embodiments of the system or portions of the system may be in the form of a "processing machine," such as a general-purpose computer, for example. As used herein, the term "processing machine" is to be understood to include at least one processor that uses at least one memory. The at least one memory stores a set of instructions. The instructions may be either permanently or temporarily stored in the memory or memories of the processing machine. The processor executes the instructions that are stored in the memory or memories in order to process data. The set of instructions may include various instructions that perform a particular task or tasks, such as those tasks described above. Such a set of instructions for performing a particular task may be characterized as a program, software program, or simply software.

In one embodiment, the processing machine may be a specialized processor.

In one embodiment, the processing machine may be a cloud-based processing machine, a physical processing machine, or combinations thereof.

As noted above, the processing machine executes the instructions that are stored in the memory or memories to process data. This processing of data may be in response to commands by a user or users of the processing machine, in response to previous processing, in response to a request by another processing machine and/or any other input, for example.

As noted above, the processing machine used to implement embodiments may be a general-purpose computer. However, the processing machine described above may also utilize any of a wide variety of other technologies including a special purpose computer, a computer system including, for example, a microcomputer, mini-computer or mainframe, a programmed microprocessor, a micro-controller, a peripheral integrated circuit element, a CSIC (Customer Specific Integrated Circuit) or ASIC (Application Specific Integrated Circuit) or other integrated circuit, a logic circuit, a digital signal processor, a programmable logic device such as a FPGA (Field-Programmable Gate Array), PLD (Programmable Logic Device), PLA (Programmable Logic Array), or PAL (Programmable Array Logic), or any other device or arrangement of devices that is capable of implementing the steps of the processes disclosed herein.

The processing machine used to implement embodiments may utilize a suitable operating system.

It is appreciated that in order to practice the method of the embodiments as described above, it is not necessary that the processors and/or the memories of the processing machine be physically located in the same geographical place. That is, each of the processors and the memories used by the processing machine may be located in geographically distinct locations and connected so as to communicate in any suitable manner. Additionally, it is appreciated that each of the processor and/or the memory may be composed of different physical pieces of equipment. Accordingly, it is not necessary that the processor be one single piece of equipment in one location and that the memory be another single piece of equipment in another location. That is, it is contemplated that the processor may be two pieces of equipment in two different physical locations. The two distinct pieces of equipment may be connected in any suitable manner. Additionally, the memory may include two or more portions of memory in two or more physical locations.

To explain further, processing, as described above, is performed by various components and various memories. However, it is appreciated that the processing performed by two distinct components as described above, in accordance with a further embodiment, may be performed by a single component. Further, the processing performed by one distinct component as described above may be performed by two distinct components.

In a similar manner, the memory storage performed by two distinct memory portions as described above, in accordance with a further embodiment, may be performed by a single memory portion. Further, the memory storage performed by one distinct memory portion as described above may be performed by two memory portions.

Further, various technologies may be used to provide communication between the various processors and/or memories, as well as to allow the processors and/or the memories to communicate with any other entity; i.e., so as to obtain further instructions or to access and use remote memory stores, for example. Such technologies used to provide such communication might include a network, the Internet, Intranet, Extranet, a LAN, an Ethernet, wireless communication via cell tower or satellite, or any client server system that provides communication, for example. Such communications technologies may use any suitable protocol such as TCP/IP, UDP, or OSI, for example.

As described above, a set of instructions may be used in the processing of embodiments. The set of instructions may be in the form of a program or software. The software may be in the form of system software or application software, for example. The software might also be in the form of a collection of separate programs, a program module within a larger program, or a portion of a program module, for example. The software used might also include modular programming in the form of object-oriented programming. The software tells the processing machine what to do with the data being processed.

Further, it is appreciated that the instructions or set of instructions used in the implementation and operation of embodiments may be in a suitable form such that the processing machine may read the instructions. For example, the instructions that form a program may be in the form of a suitable programming language, which is converted to machine language or object code to allow the processor or processors to read the instructions. That is, written lines of programming code or source code, in a particular programming language, are converted to machine language using a compiler, assembler or interpreter. The machine language is binary coded machine instructions that are specific to a particular type of processing machine, i.e., to a particular type of computer, for example. The computer understands the machine language.

Any suitable programming language may be used in accordance with the various embodiments. Also, the instructions and/or data used in the practice of embodiments may utilize any compression or encryption technique or algorithm, as may be desired. An encryption module might be used to encrypt data. Further, files or other data may be decrypted using a suitable decryption module, for example.

As described above, the embodiments may illustratively be embodied in the form of a processing machine, including a computer or computer system, for example, that includes at least one memory. It is to be appreciated that the set of instructions, i.e., the software for example, that enables the computer operating system to perform the operations described above may be contained on any of a wide variety of media or medium, as desired. Further, the data that is processed by the set of instructions might also be contained on any of a wide variety of media or medium. That is, the particular medium, i.e., the memory in the processing machine, utilized to hold the set of instructions and/or the data used in embodiments may take on any of a variety of physical forms or transmissions, for example. Illustratively, the medium may be in the form of a compact disc, a DVD, an integrated circuit, a hard disk, a floppy disk, an optical disc, a magnetic tape, a RAM, a ROM, a PROM, an EPROM, a wire, a cable, a fiber, a communications channel, a satellite transmission, a memory card, a SIM card, or other remote transmission, as well as any other medium or source of data that may be read by the processors.

Further, the memory or memories used in the processing machine that implements embodiments may be in any of a wide variety of forms to allow the memory to hold instructions, data, or other information, as is desired. Thus, the memory might be in the form of a database to hold data. The database might use any desired arrangement of files such as a flat file arrangement or a relational database arrangement, for example.

In the systems and methods, a variety of "user interfaces" may be utilized to allow a user to interface with the processing machine or machines that are used to implement embodiments. As used herein, a user interface includes any hardware, software, or combination of hardware and software used by the processing machine that allows a user to interact with the processing machine. A user interface may be in the form of a dialogue screen for example. A user interface may also include any of a mouse, touch screen, keyboard, keypad, voice reader, voice recognizer, dialogue screen, menu box, list, checkbox, toggle switch, a pushbutton or any other device that allows a user to receive information regarding the operation of the processing machine as it processes a set of instructions and/or provides the processing machine with information. Accordingly, the user interface is any device that provides communication between a user and a processing machine. The information provided by the user to the processing machine through the user interface may be in the form of a command, a selection of data, or some other input, for example.

As discussed above, a user interface is utilized by the processing machine that performs a set of instructions such that the processing machine processes data for a user. The user interface is typically used by the processing machine for interacting with a user either to convey information or receive information from the user. However, it should be appreciated that in accordance with some embodiments of the system and method, it is not necessary that a human user actually interact with a user interface used by the processing machine. Rather, it is also contemplated that the user interface might interact, i.e., convey and receive information, with another processing machine, rather than a human user. Accordingly, the other processing machine might be characterized as a user. Further, it is contemplated that a user interface utilized in the system and method may interact partially with another processing machine or processing machines, while also interacting partially with a human user.

It will be readily understood by those persons skilled in the art that embodiments are susceptible to broad utility and application. Many embodiments and adaptations of the present invention other than those herein described, as well as many variations, modifications and equivalent arrangements, will be apparent from or reasonably suggested by the foregoing description thereof, without departing from the substance or scope.

Accordingly, while the embodiments of the present invention have been described here in detail in relation to its exemplary embodiments, it is to be understood that this disclosure is only illustrative and exemplary of the present invention and is made to provide an enabling disclosure of the invention. Accordingly, the foregoing disclosure is not intended to be construed or to limit the present invention or otherwise to exclude any other such embodiments, adaptations, variations, modifications or equivalent arrangements.

## Claims

1. A method, comprising:
receiving, by a computer program executed by an electronic device, a current login attempt by a user using a user electronic device;
generating, by the computer program, an authentication confidence score based on the current login attempt;
retrieving, by the computer program, login event attributes for a past login event with a low authentication confidence score in response to the current login attempt having a high authentication confidence score;
displaying, by the computer program, the login event attributes on the user electronic device;
receiving, by the computer program, a request to deactivate a user electronic device involved in the past login event; and
deactivating, by the computer program, the user electronic device involved in the past login event.

2. The method of claim 1, wherein the authentication confidence score is based on the current login attempt matching a user login pattern for the user.

3. The method of claim 1, wherein the authentication confidence score is based on a type of login, a login history of the user electronic device, a geolocation of the user electronic device, and/or an IP address used by the user electronic device.

4. The method of claim 1, wherein the login event attributes comprise a device type for the user electronic device involved in the past login event, a date and time of the past login event, and an IP address of the past login event.

5. The method of claim 1, wherein the current login attempt is a browser-based login attempt.

6. The method of claim 1, wherein the current login attempt is an application-based login attempt.

7. The method of claim 1, wherein deactivating the user electronic device involved in the past login event removes the user electronic device involved in the past login event from a list of trusted devices.

8. A method, comprising:
receiving, by a computer program executed by an electronic device, a current login attempt by a user using a user electronic device;
generating, by the computer program, an authentication confidence score based on the current login attempt;
storing, by the computer program, login event attributes for the current login attempt;
sending, by the computer program, an out-of-band message to the user requesting user login confirmation;
receiving, by the computer program, confirmation for the current login attempt from the user; and
performing, by the computer program, step-up authentication using the user electronic device.

9. The method of claim 8, wherein the authentication confidence score is based on the current login attempt matching a user login pattern for the user.

10. The method of claim 8, wherein the authentication confidence score is based on a type of login, a login history of the user electronic device, a geolocation of the user electronic device, and/or an IP address used by the user electronic device.

11. The method of claim 8, wherein the login event attributes comprise a device type for the user electronic device, a date and time of the current login attempt, and an IP address of the current login attempt.

12. The method of claim 8, wherein the current login attempt is a browser-based login attempt.

13. The method of claim 8, wherein the current login attempt is an application-based login attempt.

14. A non-transitory computer readable storage medium, including instructions stored thereon, which when read and executed by one or more computer processors, cause the one or more computer processors to perform steps comprising:
receiving a current login attempt by a user using a user electronic device;
generating an authentication confidence score based on the current login attempt;
retrieving login event attributes for a past login event with a low authentication confidence score in response to the current login attempt having a high authentication confidence score;
displaying the login event attributes on the user electronic device;
receiving a request to deactivate a user electronic device involved in the past login event; and
deactivating the user electronic device involved in the past login event.

15. The non-transitory computer readable storage medium of claim 14, wherein the authentication confidence score is based on the current login attempt matching a user login pattern for the user.

16. The non-transitory computer readable storage medium of claim 14, wherein the authentication confidence score is based on a type of login, a login history of the user electronic device, a geolocation of the user electronic device, and/or an IP address used by the user electronic device.

17. The non-transitory computer readable storage medium of claim 14, wherein the login event attributes comprise a device type for the user electronic device involved in the past login event, a date and time of the past login event, and an IP address of the past login event.

18. The non-transitory computer readable storage medium of claim 14, wherein the current login attempt is a browser-based login attempt.

19. The non-transitory computer readable storage medium of claim 14, wherein the current login attempt is an application-based login attempt.

20. The non-transitory computer readable storage medium of claim 14, wherein deactivating the user electronic device involved in the past login event removes the user electronic device involved in the past login event from a list of trusted devices.
